# EUROPEAN PATENT APPLICATION

(11) **EP 4 385 655 A1**
(43) Date of publication of application: **19.06.2024**
(21) Application number: 22858079.1
(22) Date of filing: 08.03.2022
(51) Int. Cl.: B23Q 11/00, B23Q 17/00

(54) **COOLING MEDIUM INJECTION DEVICE**

(30) Priority: 16.08.2021 JP 2021132477
(71) Applicant: NT Tool Corporation, Takahama City Aichi 444-1386 (JP)
(72) Inventor: ISHIKAWA Hitoshi, Takahama-City, Aichi 4441386 (JP); SUZUKI Hiroyuki, Kariya-shi, Aichi 448-8688 (JP)
(74) Representative: Kramer Barske Schmidtchen Patentanwälte PartG mbB
(86) International application number: PCT/JP2022/010079
(87) International publication number: WO 2023/021754

(57) **Abstract**

[Object] To provide a cooling medium spray device that can increase the pressure of a cooling medium supplied from a main shaft of a machine tool.

[Solution] A rotary part of a pump 200 is connected to a body member 110. In a state in which the body member 110 has been attached to a main shaft 20 of a machine tool 10, a rotation stopping pin 310 of a rotation stopping device 300 fits in a fitting hole 41 of the machine tool 10 and abuts on a wall surface 41a of the fitting hole 41. Furthermore, the rotation stopping pin 310 and a rotation stopping lever 340 move toward one side in an axial direction against an elastic force of a spring 320, and engagement of the rotation stopping lever 340 with an engagement hole 113 provided in the body member 110 is released. Thus, a support part (a cover 150 and a case 160) is fixed to the machine tool 10, and rotation of the support part around the body member 110 is prevented. Furthermore, rotation of the body member 110 relative to the support part becomes possible. A force detecting sensor 50 outputs a force detection signal indicating a force with which the pin 310 is pressing against the wall surface 41a.

## Description

### TECHNICAL FIELD

The present disclosure relates to a cooling medium spray device that sprays a cooling medium that is being supplied from a main shaft of a machine tool.

### BACKGROUND ART

In a machine tool for cutting a metal workpiece, a tool holder that is mountable on a main shaft (which is called as a "spindle") of the machine tool is used. Furthermore, when machining a workpiece using a tool, it is necessary to supply a cooling medium such as an oil to a cutting edge of the tool for the purpose of lubrication between the workpiece and the tool, cooling of the workpiece or the tool, removal (cleaning) of chips (sometimes called "swarf") generated by the machining operation, or the like. Therefore, a tool holder, which is provided with a cooling medium supply mechanism that sprays the cooling medium (which is called as a "coolant") that is being supplied from the main shaft of the machine tool to a cutting edge of the tool, is used. Furthermore, in order to be able to spray the cooling medium in a stable manner, as disclosed in Patent Document 1 (Japanese Unexamined Patent Application Publication No. S62-4550), a tool holder, which is provided with a cooling medium supply mechanism constituted by a pump that has a rotary part coupled to the main shaft, is used.

### PRIOR ART DOCUMENT

### PATENT DOCUMENT

Patent Document 1: Japanese Unexamined Patent Application Publication No. S62-4550

### SUMMARY OF THE INVENTION

### PROBLEM TO BE SOLVED BY THE INVENTION

Chips generated during machining of a workpiece cannot be sufficiently removed using a cooling medium sprayed from a cooling medium supply mechanism provided in a tool holder at the pressure of the cooling medium that is being supplied from a main shaft of a typical machine tool. In addition, burrs generated during machining of the workpiece cannot be sufficiently removed.

Therefore, after having machined the workpiece, the operator performs an operation (removal operation) that removes chips and burrs remaining on the workpiece.

It is therefore conceivable to increase removal effectiveness of chips and burrs by increasing the pressure of the cooling medium that is sprayed from the cooling medium supply mechanism provided in the tool holder.

In order to increase the pressure of the cooling medium that is sprayed from the cooling medium supply mechanism provided in the tool holder, it is required to increase the pressure of the cooling medium that is being supplied from the main shaft of the machine tool.

However, in order to increase the pressure of the cooling medium that is being supplied from the main shaft of the machine tool, it is required to design the machine tool in a high pressure manner and is thus quite costly.

Further, it is conceivable to use a tool holder provided with a cooling medium supply mechanism constituted by a pump that has a rotary part coupled to a main shaft as disclosed in Patent Document 1. In this case, by increasing the rotational speed of the rotary part of the pump, the pressure of the cooling medium that is sprayed from the cooling medium supply mechanism will increase.

However, the tool holder disclosed in Patent Document 1 is one that sprays the cooling medium to a cutting edge, etc. of a tool while machining a workpiece using the held tool. Therefore, there is a limit to increasing the rotational speed of the tool holder.

Further, in the tool holder disclosed in Patent Document 1, the spray hole of the cooling medium supply mechanism rotates together with the main shaft. Therefore, the cooling medium sprayed from the spray hole is diffused by centrifugal force and the cooling medium cannot be sprayed toward a prescribed location in a focused manner. Specifically, the cooling medium cannot be sprayed in a focused manner to a location where chips tend to be left unremoved or to a location where burrs tend to be generated.

It is accordingly an object of the present disclosure to provide a cooling medium spray device that can increase the pressure of a cooling medium supplied from a main shaft of a machine tool and can spray the cooling medium toward a prescribed location in a focused manner.

### MEANS FOR SOLVING THE PROBLEM

One aspect of the present disclosure relates to a cooling medium spray device having a body part, a support part, a pump, a cap, a nozzle, a rotation stopping device and a force detecting device.

The body part is detachably attachable to a main shaft of a machine tool. Furthermore, the body part has a body part passage through which the cooling medium supplied from the main shaft is conducted in a state in which the body part has been attached to the main shaft. Various methods can be used as the method that attaches the body part to the main shaft. For example, a method that attaches a pull stud to a rear end side of the body part and pulls the pull stud toward the main shaft can be used.

The support part is formed in a tubular shape having a support part interior space. The body part is disposed in the support part interior space in a rotatable manner. Furthermore, the support part has a first passage and a second passage through which the cooling medium passes. The first passage communicates with the body part passage of the body part. Various methods can be used as the method that communicates the first passage with the body part passage.

The pump has a rotary part, an inlet part and an outlet part. The rotary part of the pump is rotatably supported within the support part interior space of the support part while being connected to the body part. The inlet part communicates with the first passage, and the outlet part communicates with the second passage. By rotating the rotary part, the pump increases the pressure of the cooling medium suctioned from the inlet part and discharges it from the outlet part. A variety of configurations of pumps can be used as the pump. The rotary part of the pump may be rotated in conjunction with rotation of the body part, and it may be directly connected to the body part or connected via another member or other members.

The cap is disposed on one side (front end side) of the pump in an axial direction on the support part so as to close the support part interior space of the support part. Furthermore, the cap has a nozzle mounting hole in which the nozzle is mounted and a cap passage that communicates with the nozzle mounting hole.

The nozzle is formed with a nozzle passage having a spray hole. The nozzle is mounted in the nozzle mounting hole of the cap such that the nozzle passage communicates with the nozzle mounting hole.

The body part disposed in the support part interior space is rotatable relative to the support part. Therefore, the rotation stopping device, which prevents rotation of the support part around the body part in the state (when the pump is operated) in which the body part has been attached to the main shaft, is provided.

It is noted that, when the pump is operated, the rotational speed of the main shaft to which the body part (the rotary part of the pump) has been attached is set such that the pressure of the cooling medium to be sprayed from the spray hole of the nozzle becomes a pressure necessary to remove chips and burrs or the like.

The rotation stopping device has a pressing member that is provided in the support part. Furthermore, the rotation stopping device is configured such that, in the state in which the body part has been attached to the main shaft, rotation of the support part around the body part is prevented by abutment of the pressing member on an abutment part provided on the machine tool.

The force detecting device has a force detecting sensor. The force detecting sensor outputs a force detection signal that indicates the force with which the abutment part is being pressed by the pressing member. A variety of known configurations of force detecting sensors can be used as the force detecting sensor.

The pressing state of the pressing member against the abutment part, that is the operating state of the rotation stopping device, can be determined by whether the force, which is being indicated by the force detection signal from the force detecting sensor, is within a normal range. For example, if the force that is being indicated by the force detection signal is below the lower limit of the normal range, it can be determined that the force with which the pressing member is pressing against the abutment part has decreased. Thus, the state of the cooling medium spray device (whether it needs to be inspected, repaired or replaced, and the like) can be easily determined.

In the cooling medium spray device of the present disclosure, the cooling medium can be sprayed in a prescribed direction in a focused manner while the pressure of the cooling medium that is being supplied from the main shaft of the machine tool can be increased to a pressure capable of removing chips and burrs generated during machining of a workpiece. Thus, by using the cooling medium spray device of the present disclosure, chips and burrs remaining on the machined workpiece can be reliably removed at low cost with a simple configuration. Further, the state of the cooling medium spray device can be easily determined.

In a different aspect of the present disclosure, the body part is configured such that the body part can be attached to the main shaft by the body part being moved toward the other side (toward the rear end side) in the axial direction relative to the main shaft.

The rotation stopping device includes an elastic force generating part provided in the support part.

The pressing member is formed to be fittable in a fitting part provided in the machine tool while being movable in the axial direction relative to the support part.

The elastic force generating part generates an elastic force that moves the pressing member toward the other side in the axial direction relative to the support part.

In the state in which the body part has been attached with the main shaft, the pressing member of the rotation stopping device abuts on a wall surface of the fitting part, which is the abutment part, while being fitted in the fitting part. Thus, the rotation stopping member moves toward the one side in the axial direction against the elastic force generated by the elastic force generating part. A fitting hole is formed such that, in the state in which the pressing member has been fitted in the fitting hole, the support part is prevented from rotating around the body part. The rotation stopping device of this aspect prevents the support part from rotating around the body part by the fitting of the pressing member in the fitting hole and the abutment (pressing) of the pressing member on the wall surface of the fitting hole.

In this aspect, rotation of the support part around the body part can be more reliably prevented.

In a different aspect of the present disclosure, the rotation stopping device includes an engagement part and an engaging member. The engagement part is provided in the body part. The engaging member is configured to move along the axial direction in conjunction with the pressing member and to be engageable with the engagement part provided in the body part.

In a state in which the body part is not attached to the main shaft, the engaging member of the rotation stopping device is located at an engagement position where it engages with the engagement part. Thus, rotation of the body part relative to the support part is prevented. Furthermore, in the state in which the body part has been attached to the main shaft, the engaging member of the rotation stopping device is located at a disengagement position where it is disengaged from the engagement part. Thus, rotation of the body part relative to the support part becomes possible.

In this aspect, in the state in which the body part is not attached to the main shaft, the body part and the support part can be easily managed. Furthermore, in the state in which the body part has been attached to the main shaft, the body part, that is the rotary part of the pump connected to the body part, can be reliably rotated.

Here, the pressure of the cooling medium within the second passage of the support part corresponds to the pressure of the cooling medium sprayed from the spray hole of the nozzle. Therefore, the spraying state of the cooling medium from the spray hole of the nozzle, that is the state of the cooling medium spray device, can be determined by determining the pressure of the cooling medium within the second passage of the support part.

In a different aspect of the present disclosure, it is configured such that the pressure of the cooling medium within the second passage of the support part acts as a force that moves the pressing member toward the other side (toward the rear end side) in the axial direction. The pressure of the cooling medium within the second passage of the support part may be directly or indirectly applied to the pressing member.

The pump of the cooling medium spray device is configured such that, when the rotary part of the pump is being rotated at a prescribed rotational speed, cooling medium having a prescribed pressure is discharged.

In the state in which the body part has been attached to the main shaft but the main shaft (the rotary part of the pump) is not rotating, the force (pressure) with which the pressing member presses against the wall surface of the fitting part corresponds to the elastic force Fa generated by the elastic force generating part. That is, the force detecting sensor outputs a force detection signal indicating a force (pressure) Ga corresponding to the elastic force Fa. On the other hand, in the state in which the body part has been attached to the main shaft and the main shaft (the rotary part of the pump) is rotating at the prescribed rotational speed, the force (pressure) with which the pressing member presses against the wall surface of the fitting part is the sum of the force (pressure) Ga corresponding to the elastic force Fa generated by the elastic force generating part and a force (pressure) Gb corresponding to the pressure T of the cooling medium within the second passage. That is, the force detecting sensor outputs a force detection signal indicating the sum Gc (=Ga+Gb) of the force (pressure) Ga corresponding to the elastic force Fa and the force (pressure) Gb corresponding to the pressure T of the cooling medium.

In a situation in which the performance of the pump has deteriorated, the pressure T of the cooling medium within the second passage decreases; in a situation in which the spray hole of the nozzle has clogged, the pressure T of the cooling medium within the second passage increases. Therefore, a state in which the performance of the pump has deteriorated and a state in which the spray hole of the nozzle has clogged can be determined based on the pressure T within the second passage.

The pressure T of the cooling medium within the second passage can be determined based on the force detection signal outputted from the force detecting sensor. For example, the pressure T of the cooling medium within the second passage can be determined based on the difference Gb (=Gc-Ga) between the force (pressure) Gc at the time when the rotary part of the pump is rotating at the prescribed rotational speed and the force (pressure) Ga at the time when the rotary part of the pump is not rotating.

In this aspect, the state of the cooling medium spray device (whether it needs to be inspected, repaired or replaced, and the like) can be determined more reliably.

In a different aspect of the present disclosure, the rotation stopping device includes a transmitting member that transmits the elastic force generated by the elastic force generating part to the pressing member. Furthermore, the rotation stopping device is configured such that the pressure of the cooling medium within the second passage of the support part is transmitted to the pressing member via the transmitting member as a force that moves the pressing member toward the other side (toward the rear end side) in the axial direction.

In this aspect, the pressure of the cooling medium within the second passage can be determined with a simple structure.

In a different aspect of the present disclosure, the cooling medium spray device has a transmitting member that is movable along the axial direction relative to the support part and abuts on the engaging member in the state in which the body part has been attached to the main shaft.

Furthermore, it is configured such that, in the state in which the body part has been attached to the main shaft, the pressure of the cooling medium within the second passage of the support part is transmitted to the pressing member via the transmitting member and the engaging member as a force that moves the pressing member toward the other side (toward the rear end side) in the axial direction.

In this aspect, the pressure of the cooling medium within the second passage can be determined with a simple structure.

### EFFECT OF THE INVENTION

By providing a cooling medium spray device of the present disclosure, while the pressure of the cooling medium can be increased, the cooling medium, which has been increased in pressure, can be sprayed toward a prescribed location in a focused manner, and thereby chips and burrs remaining on the machined workpiece can be easily and reliably removed. Furthermore, the state of the cooling medium spray device can be easily determined.

### BRIEF DESCRIPTION OF THE DRAWINGS

FIG. 1 is a sectional view of a cooling medium spray device of a first embodiment.
FIG. 2 is a drawing that explains an operation that attaches the cooling medium spray device of the first embodiment to a machine tool.
FIG. 3 is a partial, enlarged view of an essential part of FIG. 2.
FIG. 4 is a drawing that shows a state in which the cooling medium spray device of the first embodiment has been attached to the machine tool.
FIG. 5 is a sectional view of a cooling medium spray device of a second embodiment.
FIG. 6 is a drawing that explains an operation that attaches the cooling medium spray device of the second embodiment to the machine tool.
FIG. 7 is a partial, enlarged view of an essential part of FIG. 5.
FIG. 8 is a partial, enlarged view of an essential part of FIG. 6.
FIG. 9 is a drawing that shows a state in which the cooling medium spray device of the second embodiment has been attached to the machine tool.
FIG. 10 is a sectional view of a cooling medium spray device of a third embodiment.
FIG. 11 is a drawing that explains an operation that attaches the cooling medium spray device of the third embodiment to the machine tool.
FIG. 12 a drawing that shows a state in which the cooling medium spray device of the third embodiment has been attached to the machine tool.

### MODES FOR CARRYING OUT THE INVENTION

The following detailed description merely teaches a person skilled in the art detailed information for practicing preferred exemplary embodiments of the present invention. The technical scope of the present invention is not limited by the detailed description and is to be determined based on the statements of the scopes of the claims. For this reason, combinations of configurations and methods in the following detailed description are not necessary to practice the invention in the broadest sense, and are limited to disclosing representative examples of the present invention in the detailed description, which has been given with reference numbers of the accompanying drawings.

In the following, embodiments of a cooling medium spray device of the present disclosure are described with reference to the drawings.

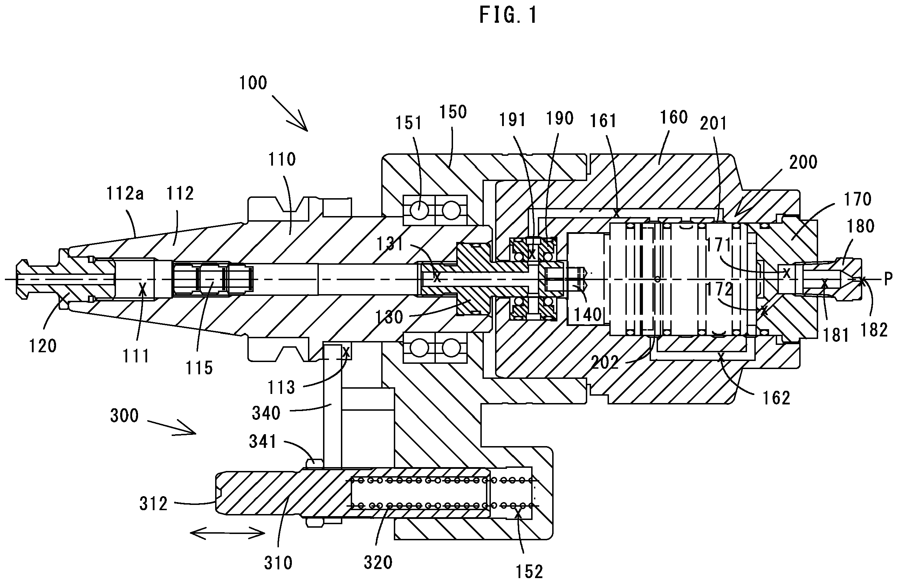

It is noted that, hereinbelow, a direction along a center line P of a cooling medium spray device is called the "axial direction". Furthermore, the side on which a nozzle is disposed (arrow A side (right side) in FIGS. 1, 5 and 10) is called the "front end side" or the "front end side in the axial direction". In addition, the side (the side on which a body member is disposed) opposite to the side on which the nozzle is disposed (arrow B side (left side) in FIGS. 1, 5 and 10) is called the "rear end side" or the "rear end side in the axial direction".

A first embodiment of the cooling medium spray device of the present disclosure will be described with reference to FIGS. 1 to 4.

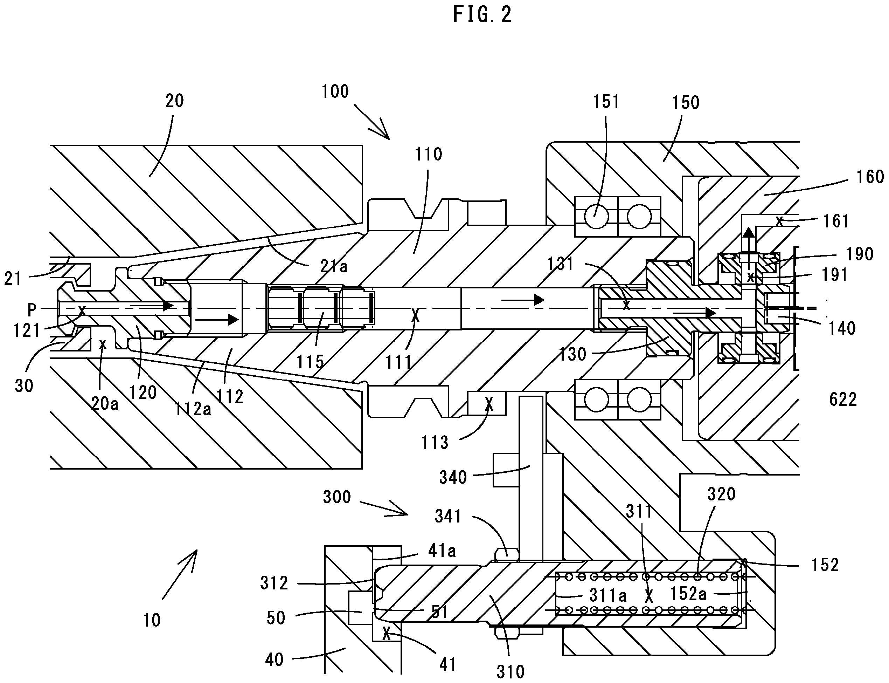

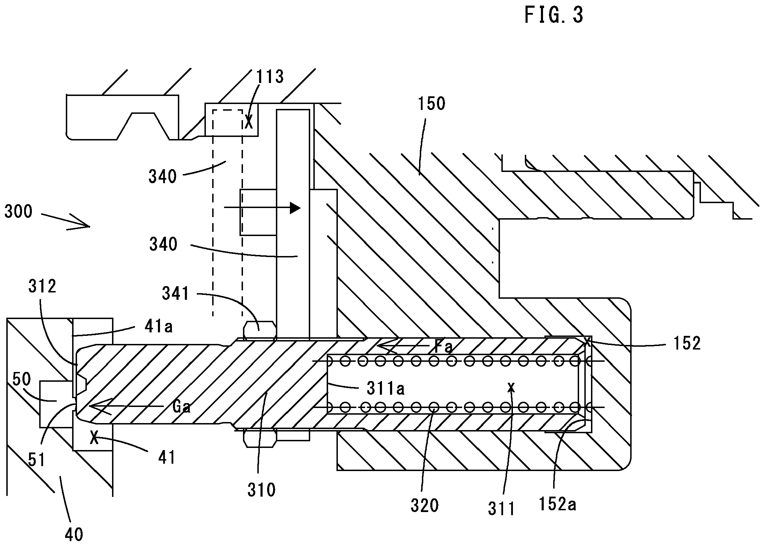

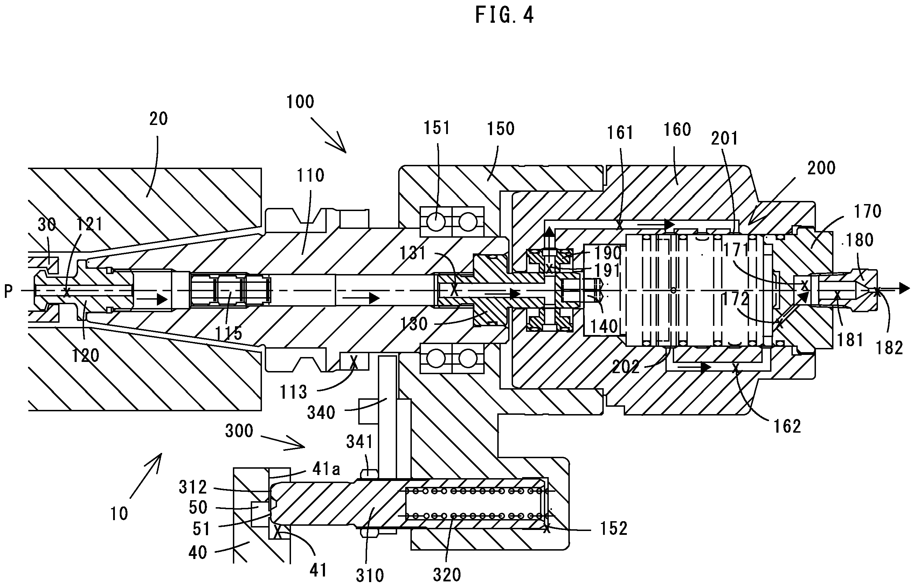

FIG. 1 is a sectional view of a cooling medium spray device 100 according to the first embodiment. FIG. 2 is a partially enlarged view of an essential part of FIG. 1. FIG. 3 is a drawing that explains an operation that attaches the cooling medium spray device 100 of the first embodiment to a machine tool 10. FIG. 4 is a drawing that shows a state in which the cooling medium spray device 100 of the first embodiment has been attached to the machine tool 10.

It is noted that, in the present embodiment, a cooling medium such as oil is supplied to a cutting edge of the tool for the purpose of lubrication between the workpiece and the tool, cooling of the workpiece and the tool, or removal (cleaning) of chips generated by the machining operation. Such a cooling medium is called a coolant. Thus, the cooling medium spray device of this embodiment may also be called a "coolant spray device".

The cooling medium spray device 100 of the first embodiment has a body part, a support part, a cap 170, a nozzle 180, a pump 200, a rotation stopping device 300 and a force detecting device.

The body part includes a body member 110 and an adapter 130.

The body member 110 has a shank part 112 that can be attached to a main shaft 20 of the machine tool 10 at the rear end side. A body member outer peripheral surface portion 112a corresponding to the shank part 112 is formed with a tapered surface that is inclined such that its outer diameter decreases from the front end side toward the rear end side. As will be described below, the tapered surface of the body member outer peripheral surface portion 112a is formed to be capable of taper fitting with a tapered surface of a main shaft inner peripheral surface portion 21a (described below) of the main shaft 20 of the machine tool 10. Furthermore, as will be described below, the body member 110 has an engagement hole 113 that is engageable with a rotation stopping lever 340 provided on a cover 150.

The body member 110 further has a body member passage 111 that extends through the center in the axial direction. The body member passage 111 is formed such that, in the state in which the shank part 112 of the body member 110 has been attached to the main shaft 20, cooling medium supplied from the main shaft 20 passes therethrough.

A filter 115 is disposed within the body member passage 111 and removes foreign matter contained in the cooling medium passing through the body member passage 111. A variety of known filters capable of removing foreign matter contained in the cooling medium can be used as the filter 115.

The adapter 130 is mounted on the front end side of the body member 110. In the present embodiment, a portion on the rear end part of the adapter 130 is screwed into a front end part of the body member passage 111. Furthermore, a portion on the front end part of the adapter 130 protrudes from a front end surface of the body member 110. A sealing member such as an O-ring is disposed between the body member 110 and the adapter 130.

The adapter 130 has an adapter passage 131 through which the cooling medium passes. In the present embodiment, the adapter passage 131 has a first passage portion extending in the axial direction and a second passage portion that is connected to a front end of the first passage portion and extends in a radial direction. A rear end of the first passage portion communicates with the body member passage 111, and the second passage portion is open to an outer peripheral surface of a front end part of the adapter 130.

A "body part" of the present invention is constituted by the body member 110 and the adapter 130. In addition, a "body part passage" of the present invention is constituted by the body member passage 111 and the adapter passage 131.

The support part rotatably supports the body part (the body member 110 and the adapter 130) and a rotary part of the pump 200. The support part is constituted by a cover 150, a case 160 and a ring member 190.

The body member 110 is rotatably disposed within a cover interior space of the cover 150 via a bearing 151. Thus, the body member 110 is rotatable relative to the cover 150.

The cover 150 has a hole 152 that is open at the rear end side while extending in the axial direction at a position spaced apart in a radial direction (in a direction orthogonal to the axial direction) from the cover interior space in which the body member 110 is disposed. A rotation stopping pin 310 is inserted into the hole 152 so as to be movable in the extension direction of the hole 152. The rotation stopping pin 310 has a hole 311 that extends in the axial direction and is open at a front end side.

Furthermore, a spring 320 is disposed between a bottom wall 311a of the hole 311 and a bottom wall 152a of the hole 152.

The elastic force of the spring 320 acts such that the rotation stopping pin 310 is moved toward the rear end side in the axial direction. That is, owing to the elastic force of the spring 320, the rotation stopping pin 310 receives a force that moves it in a direction (toward the rear end side) coming out from the hole 152.

A rotation stopping lever 340 is fixed to a rear end side of the rotation stopping pin 310. The position of the rotation stopping lever 340 in the axial direction is adjusted with a nut 341 that is screwed onto the rotation stopping pin 310.

In the state in which the body member 110 is not attached to the main shaft 20 (the state in which the cover 150 is not fixed to the machine tool 10), the rotation stopping pin 310 moves in the direction (toward the rear end side) coming out from the hole 152 owing to the elastic force of the spring 320. At this time, the rotation stopping lever 340 is moved to an engagement position (shown by a broken line in FIG. 3) to be engaged with the engagement hole 113 of the body member 110. As a result, rotation of the body member 110 relative to the cover 150 is prevented.

On the other hand, in the state in which the body member 110 has been attached to the main shaft 20 (the state in which the cover 150 is fixed to the machine tool 10), the rotation stopping pin 310 abuts on a wall surface 41a of a fitting hole 41 and moves in a direction (toward the front end side) that causes it to be inserted into the hole 152 against the elastic force of the spring 320. At this time, the rotation stopping lever 340 moves to a disengagement position (shown by a solid line in FIG. 3) where engagement with the engagement hole 113 of the body member 110 is released. As a result, rotation of the body member 110 relative to the cover 150 becomes possible.

The case 160 is fixed to a front end part of the cover 150 by a bolt or bolts, or the like.

The case 160 has a first case passage 161 and a second case passage 162.

The ring member 190 is disposed between a portion of the rear end part of the case 160 and a portion of the front end part of the adapter 130. The ring member 190 has a ring member passage 191 that extends in the radial direction and is open to the inner peripheral surface and to the outer peripheral surface of the ring member 190. The ring member 190 is disposed such that the ring member passage 191 communicates with the adapter passage 131 (specifically, the second passage portion of the adapter passage 131) and the first case passage 161.

Sealing members (such as O-rings) are disposed between the ring member 190 and the adapter 130 and between the ring member 190 and the case 160.

The pump 200 has an inlet part 201, an outlet part 202 and a rotary part.

The rotary part is disposed in a rotatable manner within a case interior space of the case 160.

A rear end side of the rotary part of the pump 200 is connected to the body member 110. In this embodiment, the rear end side of the rotary part of the pump 200 is connected via a knock pin 140 to the adapter 130 that is connected to the body member 110. Furthermore, a portion of the front end side of the rotary part is rotatably supported within a recess that is formed in the cap 170. In other words, the rotary part is disposed in a rotatable manner within the case interior space of the case 160. Thus, the rotary part of the pump 200 rotates in conjunction with rotation of the body member 110 that is attached to the main shaft 20.

The inlet part 201 communicates with the first case passage 161. In addition, the outlet part 202 communicates with the second case passage 162.

Owing to rotation of the rotary part, the pump 200 increases the pressure of the cooling medium suctioned from the inlet part 201 to a pressure corresponding to the rotational speed of the rotary part and discharges the cooling medium, the pressure of which has been increased, from the outlet part 202.

A variety of known pumps having a rotary part can be used as the pump 200. In this embodiment, an internal gear pump is used.

A "support part" of the present invention is constituted by the cover 150, the case 160 and the ring member 190. In addition, a "first passage of the support part" of the present invention is constituted by the ring member passage 191 and the first case passage 161. In addition, a "second passage of the support part" of the present invention is constituted by the second case passage 162. In addition, a "pump" of the present invention is constituted by the case 160, the rotary part, the inlet part 201 and the outlet part 202.

The cap 170 is fixed to the front end side of the case 160 by a bolt or bolts or the like so as to close up the case interior space of the case 160.

The cap 170 has a nozzle mounting hole 171 in which the nozzle 180 is mounted, and a cap passage 172 that communicates with the nozzle mounting hole 171.

The cap 170 is fixed to the case 160 such that the cap passage 172 communicates with the second case passage 162 of the case 160.

The nozzle 180 has a nozzle passage 181 that communicates with a spray hole 182.

The nozzle 180 is mounted in the nozzle mounting hole 171 such that the nozzle passage 181 communicates with the nozzle mounting hole 171.

It is noted that a fixing part 40 is provided on the machine tool 10 (see FIG. 2).

A fitting hole (insertion hole) 41 is provided in the fixing part 40, in which a rear end part of the rotation stopping pin 310 is fitted (inserted) in the state in which the body member 110 has been attached to the main shaft 20.

Furthermore, an abutment part that abuts on a rotation stopping pin rear end surface 312 is provided on the wall surface (bottom surface) 41a (the surface that opposes the rotation stopping pin rear end surface 312 of the rotation stopping pin 310 in the state in which the rear end part of the rotation stopping pin 310 is fitted in the fitting hole 41) of the fitting hole 41.

Furthermore, a force detecting sensor 50, which detects a force (pressure) with which the abutment part is being pressed by the rotation stopping pin 310 (specifically, the rotation stopping pin rear end surface 312), is provided. In the present embodiment, the force detecting sensor 50 is disposed such that, in the state in which the body member 110 has been attached to the main shaft 20, a pressure receiving surface 51 abuts on the rotation stopping pin rear end surface 312.

A known force detecting sensor can be used as the force detecting sensor 50. In this embodiment, a load cell having a strain body that deforms in proportion to the pressure is used.

The fitting hole (insertion hole) 41 provided on the machine tool 10 side corresponds to a "fitting part (insertion part)" of the present invention. In addition, the rotation stopping pin 310 corresponds to a "pressing member" of the present invention. In addition, the wall surface 41a of the fitting hole (insertion hole) 41 corresponds to an "abutment part" of this invention. In addition, the spring 320 corresponds to an "elastic force generating part" of the present invention.

Furthermore, the engagement hole 113 provided in the body member 110 corresponds to an "engagement part" of the present invention. In addition, the rotation stopping lever 340 fixed to the rotation stopping pin 310 corresponds to an "engaging member" of the present invention.

A "rotation stopping device" of the present invention is constituted by the rotation stopping pin 310, the spring 320, the rotation stopping lever 340, the engagement hole 113, the fitting hole 41 and the wall surface 41a of the fitting hole 41.

The force detecting sensor 50 corresponds to a "force detecting sensor that detects a force with which the abutment part is pressed by the pressing part and outputs a force detection signal" or to a "pressure detecting sensor that detects a force with which the abutment part is pressed by the pressing part and outputs a pressure detection signal" or to a "load detecting sensor that detects a load with which the abutment part is pressed by the pressing part and outputs a load detection signal" of the present invention. In addition, a "force detecting device (pressure detecting device, load detecting device)" of the present invention is constituted by the force detecting sensor (pressure detecting sensor, load detecting sensor) 50.

Next, an example of an operation that attaches the cooling medium spray device 100 of the present embodiment to the machine tool 10 will be described with reference to FIG. 2.

A pull stud 120 is attached to a rear end side of the body member 110. For example, a male thread formed on an outer peripheral surface of the pull stud 120 is threadedly engaged with a female thread formed in a body member inner peripheral surface that forms the body member passage 111. The pull stud 120 has a pull stud passage 121 that extends through the center in the axial direction, in which both ends are open. By attaching the pull stud 120 to the rear end side of the body member 110, the body member passage 111 communicates with the pull stud passage 121.

A portion of the rear end side of the pull stud 120 is inserted into a main shaft interior space 20a that is formed by a main shaft inner peripheral surface 21 of the main shaft 20 of the machine tool 10. Then, the pull stud 120 is pulled toward the machine tool 10 side (toward the rear end side) using a pulling-in member 30 provided on the machine tool 10 side. The main shaft inner peripheral surface portion 21a of the front end side of the main shaft inner peripheral surface 21 is formed as a tapered surface that is inclined such that the inner diameter decreases from the front end side to the rear end side. Thus, when the pull stud 120 is pulled into the main shaft interior space 20a, the main shaft inner peripheral surface portion 21a is taper-fitted with the body member outer peripheral surface portion 112a, and the body member outer peripheral surface portion 112a (the shank part 112) is fixedly held by the main shaft inner peripheral surface portion 21a. That is, the body member 110 can be attached to the main shaft 20.

Furthermore, by moving the body member 110 toward the rear end side, the cover 150 also moves toward the rear end side, and the rear end part of the rotation stopping pin 310 provided in the cover 150 is fitted (inserted) into the fitting hole 41 formed on the machine tool 10 side. Then, the rotation stopping pin rear end surface 312 abuts on the wall surface 41a of the fitting hole 41. At this time, owing to the elastic force of the spring 320, the wall surface 41a of the fitting hole 41 is pressed by the rotation stopping pin rear end surface 312. Furthermore, the rotation stopping pin 310 moves against the elastic force of the spring 320 in the direction of being inserted into the hole 152 (toward the front end side).

It is noted that the fitting hole 41 is configured such that, in the state in which the rotation stopping pin 310 is fitted (inserted) in the fitting hole 41, rotation of the rotation stopping pin 310 (the cover 150) around the body member 110 (around the center line P) is prevented. For example, the fitting hole 41 is formed so as to have wall surfaces on both sides in a circumferential direction, on which the rotation stopping pin 310 is abutable.

The cover 150 is fixed to the machine tool 10 when the wall surface 41a of the fitting hole 41 is pressed by the rotation stopping pin rear end surface 312 of the rotation stopping pin 310 or when the rotation stopping pin 310 is fitted (inserted) in the fitting hole 41. Thus, rotation of the cover 150 around the body member 110 is prevented.

Furthermore, by moving the rotation stopping pin 310 toward the front end side against the elastic force of the spring 320, the rotation stopping lever 340 fixed to the rotation stopping pin 310 moves toward the front end side.

In the state in which the body member 110 has been attached to the main shaft 20, the rotation stopping lever 340 then moves to the disengagement position where the engagement with the engagement hole 113 of the body member 110 is released. Thus, the body member 110, the adapter 130 and the rotary part of the pump 200 become rotatable relative to the cover 150 and the case 160.

In such a state, when the main shaft 20 rotates, the body member 110, the adapter 130 and the rotary part of the pump 200 rotate.

When the rotary part of the pump 200 rotates, the cooling medium supplied from the main shaft 20 is suctioned from the inlet part 201 of the pump 200 via the pull stud passage 121, the body member passage 111 (including the filter 115), the adapter passage 131, the ring member passage 191 and the first case passage 161. Then, the cooling medium, the pressure of which has been increased (pressurized) by the pump 200, is led into the nozzle passage 181 via the outlet part 202 of the pump 200, the second case passage 162, the cap passage 172 and the nozzle mounting hole 171 and is sprayed from the spray hole 182.

In the present embodiment, the cover 150 is fixed to the machine tool 10, the case 160 is fixed to the cover 150, the cap 170 is fixed to the case 160, and the nozzle 180 is fixed to the cap 170. That is, the nozzle 180 is fixed in a non-rotatable manner to the machine tool 10 via the cap 170, the case 160 and the cover 150. Therefore, unlike in the prior art, the cooling medium that is sprayed from the spray hole 182 of the nozzle 180 is not affected by centrifugal force caused by rotation of the spray hole, and the cooling medium can be sprayed toward a prescribed location in a focused manner.

Foreign matter contained in the cooling medium is removed by the filter 115 disposed in the body member passage 111.

An example of an operation when machining a workpiece using a tool will be described. In the following, a machine tool (a so-called "machining center"), which is equipped with a tool magazine that is capable of housing a plurality of tool holders each holding a tool, is described. In such a machine tool, in accordance with a machine program, a tool holder that is selected from among the plurality of tool holders housed in the tool magazine is mounted on the main shaft, and a workpiece is machined using a tool held by the selected tool holder. It is noted that it is configured such that a cooling medium is suppliable from the main shaft 20 to the tool holder mounted on the main shaft 20.

The cooling medium spray device 100 is housed in the tool magazine together with the plurality of tool holders.

A workpiece is attached to the machine tool.

A tool holder holding a tool required for the machining is selected from among the tool holders housed in the tool magazine, and is mounted on the main shaft 20. The workpiece is machined using the tool held by the tool holder mounted on the main shaft 20.

After the workpiece machining has been performed, the cooling medium spray device 100 housed in the tool magazine is set to a ready-for-use state. Specifically, the body member 110 is attached to the main shaft 20, and the cover 150 is fixed to the machine tool 10. Thereby, cooling medium that is being supplied from the main shaft 10 is set to a state in which it is sprayable from the spray hole 182 of the nozzle 180.

Then, the rotational speed of the main shaft 20 is set such that the pressure of the cooling medium, which is sprayed from the spray hole 182 of the nozzle 180, becomes a pressure capable of removing chips and burrs.

In the present embodiment, the discharge properties (rotational speed - discharge pressure properties) of the pump 200 are configured such that, at a prescribed rotational speed, cooling medium having a prescribed pressure that can remove chips and burrs discharges from the spray hole 182. Therefore, the rotational speed of the main shaft 20 is set to the prescribed rotational speed.

Then, the cooling medium spray device 100 (or the workpiece) is moved while spraying the cooling medium from the spray hole 182 of the nozzle 180 to a position where chips remain (or chips are likely to remain) on the machined workpiece or to a position where burrs occur (or burrs are likely to occur) on the machined workpiece.

As described above, by using the cooling medium spray device 100 of the present embodiment, the cooling medium supplied from the main shaft 20 can be sprayed in a prescribed direction in a focused manner at increased pressure. Thus, chips remaining on the machined workpiece or burrs occurring on the workpiece during machining can be reliably removed with a simple structure without the need for a removal operation by an operator.

It is noted that the operation of removing chips and burrs by using the cooling medium spray device 100 is not limited to the above-described operation.

Here, if the pressure with which the rotation stopping pin rear end surface 312 of the rotation stopping pin 310 presses against the wall surface 41a of the fitting hole 41 decreases, the operation of the rotation stopping device 300 becomes unstable. Therefore, when the force with which the rotation stopping pin rear end surface 312 of the rotation stopping pin 310 presses against the wall surface 41a of the fitting hole 41 has decreased, the cooling medium spray device 100 needs to be inspected, repaired or replaced.

In this embodiment, a force detecting device, which includes the force detecting sensor 50 that detects the force with which the rotation stopping pin rear end surface 312 of the rotation stopping pin 310 presses against the wall surface 41a of the fitting hole 41, is provided.

It is noted that, in the description above, although the force detecting sensor 50 was provided on the fitting hole 41 side (the abutment part side), it can be provided on the rotation stopping pin 310 side (the pressing member side).

In the present embodiment, in the state in which the body member 110 has been attached to the main shaft 20, the rotation stopping pin rear end surface 312 presses the wall surface 41a of the fitting hole 41 by a force Ga corresponding to the elastic force Fa of the spring 320 (the elastic force in a compressed state in which the rotation stopping pin 310 moves toward the front end side). In this state, the force detection signal outputted from the force detecting sensor 50 indicates the force Ga corresponding to the elastic force Fa.

The force detection signal outputted from the force detecting sensor 50 is transmitted, for example, to a display device or an alarm device.

The display device displays the force indicated by the force detection signal being sent from the force detecting sensor 50. An operator determines that the cooling medium spray device 100 is in need of inspection, repair or replacement (in an abnormal state) when the force indicated by the display device is not within a normal range. For example, if the force displayed by the display device decreases below the lower limit of the normal range, the operator determines that it is possible the force that fixes the cover 150 to the machine tool 10 has decreased.

The alarm device determines whether the force indicated by the force detection signal from the force detecting sensor 50 is within a normal range. Then, in case it has been determined that the force indicated by the force detection signal is not within the normal range, it is alerted to the operator that the state of the cooling medium spray device 100 is a state (abnormal state) in need of inspection, repair or replacement. For example, if the force indicated by the force detection signal decreases below the lower limit of the normal range, it is alerted that it is possible that the force that fixes the cover 150 to the machine tool 10 has decreased.

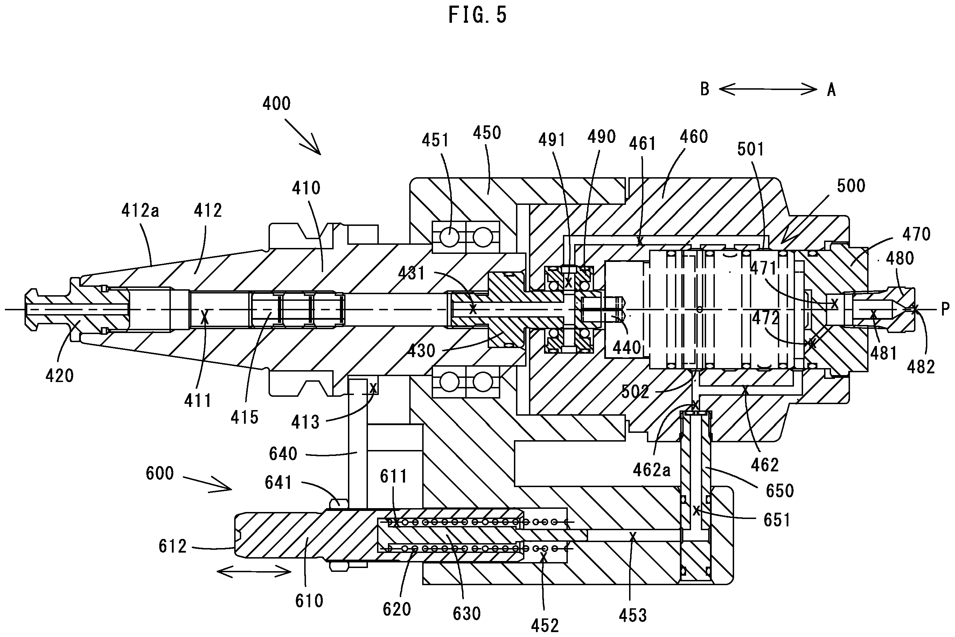

Next, a second embodiment of the cooling medium spray device according to the present disclosure will be described with reference to FIGS. 5 to 9.

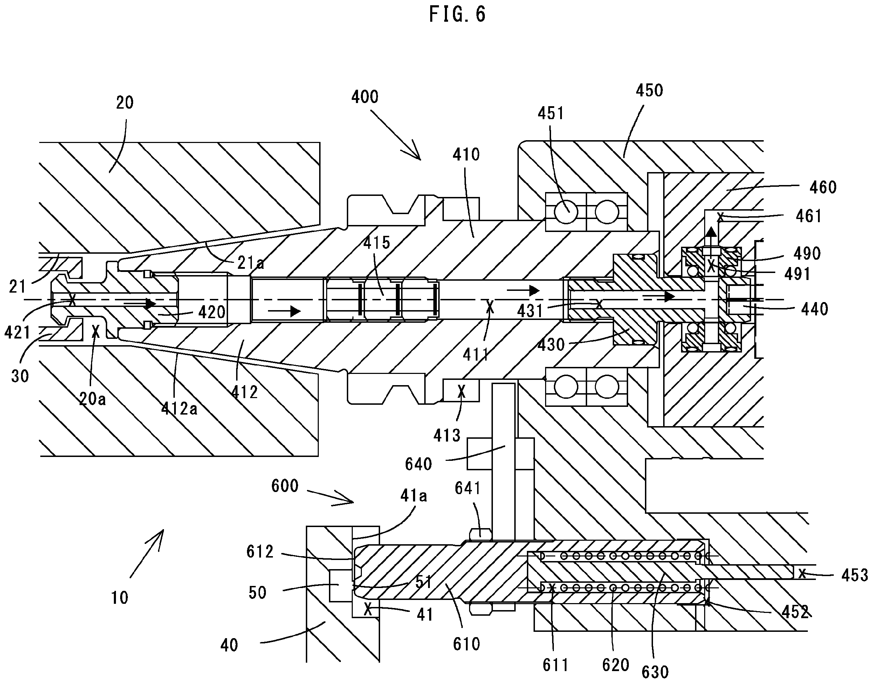

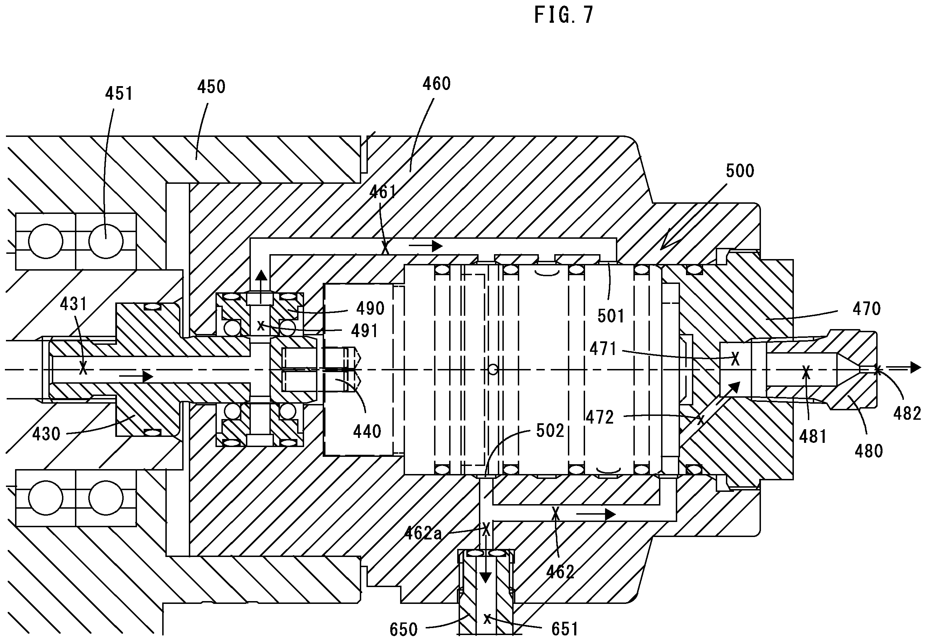

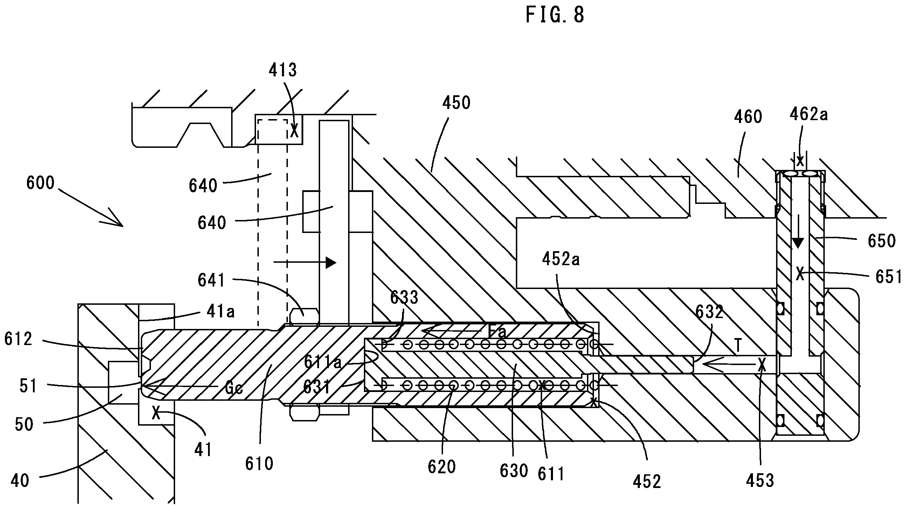

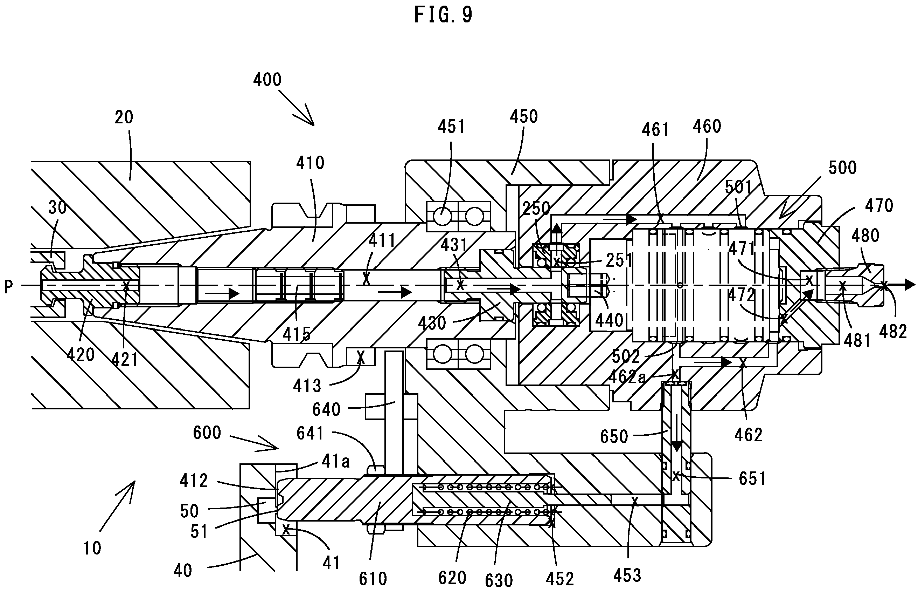

FIG. 5 is a sectional view of a cooling medium spray device 400 of the second embodiment. FIG. 6 is a drawing that illustrates an operation that attaches the cooling medium spray device 400 of the second embodiment to the machine tool 10. In addition, FIG. 7 is a partial, enlarged view of an essential part of FIG. 5. In addition, FIG. 8 is a partial, enlarged view of an essential part of FIG. 6. FIG. 9 is a drawing that shows the state in which the cooling medium spray device 400 of the second embodiment has been attached to the machine tool 10.

In the cooling medium spray device 100 of the first embodiment, the state of the cooling medium spray device (the state in which the cover is fixed to the machine tool) is determined based on the pressure with which the rotation stopping pin rear end surface is pressing against the wall surface of the fitting hole.

Here, if the performance of the pump deteriorates, at the prescribed rotational speed, the pressure of the cooling medium discharged from the outlet part of the pump decreases and the pressure of the cooling medium within the second case passage decreases. When the pressure of the cooling medium within the second case passage decreases, the pressure of the cooling medium sprayed from the spray hole of the nozzle also decreases, and the chip and burr removing effect decreases. Therefore, when the pressure of the cooling medium within the second case passage has decreased, the cooling medium spray device is in need of inspection, repair or replacement.

Furthermore, if the spray hole of the nozzle clogs, the pressure of the cooling medium sprayed from the spray hole of the nozzle decreases, and the effect of removing chips and burrs decreases. Therefore, when the spray hole of the nozzle has clogged, the cooling medium spray device is need of inspection, repair or replacement. It is noted that, if the spray hole of the nozzle clogs in the state in which the pump is discharging the cooling medium having the prescribed pressure from the outlet part at the prescribed rotational speed, the flow rate of the cooling medium sprayed from the spray hole of the nozzle reduces, and the pressure of the cooling medium within the second case passage increases. Therefore, the state in which the spray hole of the nozzle is clogged can be determined by an increase of the pressure of the cooling medium within the second case passage.

In the cooling medium spray device 400 of the second embodiment, it is configured such that the force with which the rotation stopping pin rear end surface is pressing against the wall surface of the fitting hole and the pressure of the cooling medium within the second case passage can be determined.

Like the cooling medium spray device 100 of the first embodiment, the cooling medium spray device 400 of the second embodiment includes a body part, a support part, a cap 470, a nozzle 480, a pump 500, a rotation stopping device 600 and a force detecting device.

It is noted that the cooling medium spray device 400 of the second embodiment has the same components as the cooling medium spray device 100 of the first embodiment except that it has a component that transmits the pressure of the cooling medium within a second case passage 462 to a rotation stopping pin 610 in order to determine the pressure of the cooling medium within the second case passage 462. Therefore, in the following, description of components identical to those of the cooling medium spray device 100 of the first embodiment is omitted or simplified.

The body part is constituted by a body member 410 and an adapter 430.

The support part is constituted by a cover 450, a case 460 and a ring member 490.

In the present embodiment, the cover 450 has a hole 452 that extends in the axial direction and is open at the rear end side. The rotation stopping pin 610 is inserted into the hole 452 so as to be movable along the extending direction of the hole 452. The rotation stopping pin 610 has a hole 611 that extends in the axial direction and opens at a front end side.

A passage 453, which extends in the axial direction and opens at a bottom wall 452a of the hole 452, is formed in the front end side of the hole 452.

Furthermore, a transmitting member 630 is inserted into the hole 611 and the passage 453 so as to be movable in the extending direction of the hole 611 and the passage 453.

In addition, a spring 620 is disposed between a stepped surface 633 of a rear end side of the transmitting member 630 and the bottom wall 452a of the hole 452a.

Owing to this structure, a rear end surface 631 of the transmitting member 630 abuts on a bottom wall 611a of the hole 611, and the elastic force of the spring 620 is transmitted to the rotation stopping pin 610 via the transmitting member 630. That is, owing to the elastic force of the spring 620, the rotation stopping pin 610 receives a force that moves it in a direction of coming out from the hole 452 (towards the rear end side).

A rotation stopping lever 640 is fixed to a rear end side of the rotation stopping pin 610 and is engageable in an engagement hole 413 of the body member 410.

Like in the cooling medium spray device 100 of the first embodiment, in a state in which the body member 410 is not attached to the main shaft 20, the rotation stopping pin 610 moves toward the rear end side owing to the elastic force of the spring 620. Thus, the rotation stopping lever 640 moves to an engagement position (shown by a broken line in FIG. 8) where it engages in the engagement hole 413 of the body member 410.

On the other hand, in a state in which the body member 410 has been attached to the main shaft 20, the rotation stopping pin 610 moves toward the front end side against the elastic force of the spring 620. Thus, the rotation stopping lever 640 moves to a disengagement position (shown by a solid line in FIG. 8) where the engagement in the engagement hole 413 of the body member 410 is released.

The case 460 has a first case passage 461 and a second case passage 462. In the present embodiment, a branch passage 462a branches off from the second case passage 462.

A rotary part of the pump 500 is rotatably disposed within the case interior space.

A "support part" of the present invention is constituted by the cover 450, the case 460 and a ring member 490. In addition, a "first passage of the support part" of the present invention is constituted by a ring member passage 491 and the first case passage 461. In addition, a "second passage of the support part" of the present invention is constituted by the second case passage 462. In addition, a "pump" of the present invention is constituted by the case 460, the rotary part, an inlet part 501 and an outlet part 502.

Furthermore, in the present embodiment, a connecting member 650 is provided between the cover 450 and the case 460.

The connecting member 650 has a connecting passage 651. The connecting member 650 is provided such that the passage 453 of the cover 450 communicates with the branch passage 462a of the case 460.

Owing to this structure, the pressure of the cooling medium within the second case passage 462 (specifically, within the branch passage 462a) is applied to a front end surface 632 of the transmitting member 630 via the connecting passage 651 of the connecting member 650 and the passage 453 of the cover 450. That is, the pressure of the cooling medium within the second case passage 622 is transmitted to the rotation stopping pin 610 via the transmitting member 630 and acts as a force that moves the rotation stopping pin 610 toward the rear end side.

Like the cooling medium spray device 100 of the first embodiment, a force detecting device, which is constituted by the force detecting sensor 50 that detects the force with which a rotation stopping pin rear end surface 612 is pressing against the wall surface 41a of the fitting hole 41, is also provided in the cooling medium spray device 400.

A "rotation stopping device" of the present invention is constituted by the rotation stopping pin 610, the spring 620, the transmitting member 630, the rotation stopping lever 640, the engagement hole 413, the fitting hole 41 and the wall surface 41a of the fitting hole 41.

A "force detecting device" of the present invention is constituted by the force detecting sensor 50.

A "communication passage" of the present invention is formed by the connecting passage 651 of the connecting member 650 and the passage 453 of the cover 450.

An example of an operation that attaches the cooling medium spray device 400 to the machine tool 10 is shown in FIG. 6. The operation that attaches the cooling medium spray device 400 to the machine tool 10 is similar to the operation that attaches the cooling medium spray device 100 of the first embodiment.

Like in the cooling medium spray device 100 of the first embodiment, in a state in which the body member 410 is attached to the main shaft 20 but the main shaft 20 is not rotating, the rotation stopping pin rear end surface 612 presses the wall surface 41a of the fitting hole 41 by a force Ga corresponding to the elastic force Fa of the spring 620.

In this state, a force detection signal outputted from the force detecting sensor 50 indicates the force Ga corresponding to the elastic force Fa.

Furthermore, when the main shaft 20 is rotating in a state in which the cooling medium spray device 400 has been attached to the machine tool 10, the body member 410 and the rotary part of the pump 500 rotate. At this time, the rotational speed of the main shaft 20 (the rotary part of the pump 500) is set to the prescribed rotational speed.

When the rotary part of the pump 500 is rotating, the pressure of the cooling medium supplied from the main shaft 20 is increased by the pump 500. Then, cooling medium, the pressure of which has been increased, is led to a nozzle passage 481 via the outlet part 502 of the pump 500, the second case passage 462, a cap passage 472 and a nozzle mounting hole 471, and is sprayed from the spray hole 482.

At this time, cooling medium within the second case passage 462 is led to the passage 453 via the branch passage 462a and the connecting passage 651 of the connecting member 650. That is, the pressure T of the cooling medium within the second case passage 462 is applied to the front end surface 632 of the transmitting member 630 via the branch passage 462a and the communication passage (the connecting passage 651, the passage 453). Thus, the pressure T of the cooling medium within the second case passage 462 acts upon the rotation stopping pin 610 via the transmitting member 630 as a force that moves the rotation stopping pin 610 toward the rear end side.

In this state, the rotation stopping pin rear end surface 612 presses the wall surface 41a of the fitting hole 41 with a force Gc (=Ga+Gb) obtained by adding the force Ga corresponding to the elastic force Fa of the spring 620 and a force Gb corresponding to the pressure T of the cooling medium within the second case passage 462. That is, the force detection signal outputted from the force detecting sensor 50 indicates the sum Gc (=Ga+Gb) of the force Ga corresponding to the elastic force Fa and the force Gb corresponding to the pressure T of the cooling medium within the second case passage 462.

The state of the cooling medium spray device 400 is then determined based on the force (pressure) Gc (=Ga+Gb) in the state in which the body member 410 has been attached to the main shaft 20 and the main shaft 20 is rotating, and the force (pressure) Ga in the state in which the body member 410 has been attached to the main shaft 20 but the main shaft 20 is not rotating.

Various methods can be used as the method that determines the state of the cooling medium spray device 400 based on the force Ga and the force Gc.

For example, the following method can be used.

The force detection signal outputted from the force detecting sensor 50 is transmitted, for example, to a display device or an alarm device.

The display device displays, for example, the force indicated by the force detection signal sent from the force detecting sensor 50.

An operator reads the force Ga indicated by the display device in the state in which the body member 410 has been attached to the main shaft 20 but the main shaft 20 is not rotating. Then, if the force Ga is not within a normal range, the operator determines that the cooling medium spray device 400 is in need of inspection, repair or replacement (is in an abnormal state). For example, if the force displayed by the display device decreases below the lower limit of the normal range, the operator determines that it is possible that the force with which the cover 450 is fixed to the machine tool 10 has decreased.

In addition, the operator reads the force Gc indicated by the display device in the state in which the body member 410 has been attached to the main shaft 20 and the main shaft 20 is rotating. If the difference Gb (=Gc-Ga) between the force Gc and the force Ga is not within a normal range, the operator determines that the cooling medium spray device 400 is in need of inspection, repair or replacement (is in an abnormal state). For example, if the force displayed by the display device decreases below the lower limit of the normal range, the operator determines that it is possible that the performance of the pump has deteriorated. Furthermore, if the force displayed by the display device exceeds the upper limit of the normal range, the operator determines that it is possible that the spray hole of the nozzle has clogged.

It is noted that the pressure T of the cooling medium within the second case passage 462 is indicated by [force Gb (N)/sectional area (mm²) of the transmitting member front end surface 632].

The alarm device actuates an indicator lamp, an alarm or the like when it has been determined that the force Ga indicated by the force detection signal sent from the force detecting sensor 50 is not within a normal range in the state in which the body member 410 has been attached to the main shaft 20 but the main shaft 20 is not rotating, and alerts an operator that the cooling medium spray device 400 is in need of inspection, repair or replacement (is in an abnormal state). For example, if the force displayed by the display device decreases below the lower limit of the normal range, it is alerted that it is possible that the force with which the cover 450 is fixed to the machine tool 10 has decreased.

Furthermore, the alarm device calculates the force Gb (=Gc-Ga) in which the force Ga, which is indicated by the force detection signal from the force detecting sensor 50 in the state in which the body member 410 has been attached to the main shaft 20 but the main shaft 20 is not rotating, is subtracted from the force Gc, which is indicated by the force detection signal from the force detecting sensor 50 in the state in which the body member 410 has been attached to the main shaft 20 and the main shaft 20 is rotating. Then, when it is determined that the force Gb is not within a normal range, the indicator lamp, the alarm or the like is actuated to alert the operator that the cooling medium spray device 400 is in need of inspection, repair or replacement (is in an abnormal state). For example, if the force Gb decreases below the lower limit of the normal range, it is alerted that it is possible that the performance of the pump has deteriorated. In addition, if the force Gb exceeds the upper limit of the normal range, it is alerted that it is possible that that the spray hole of the nozzle has clogged.

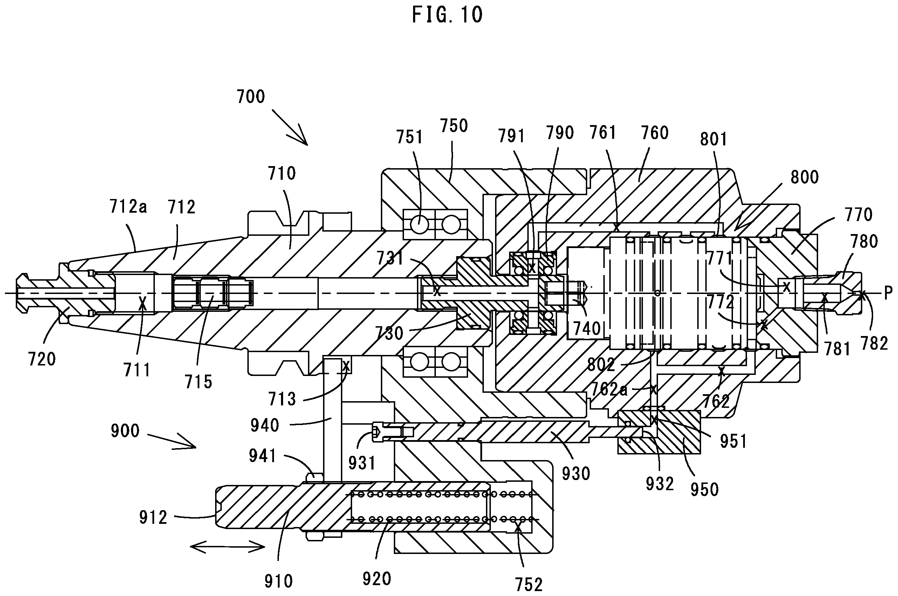

A third embodiment of the cooling medium spray device of the present disclosure will be described with reference to FIGS. 10 to 12.

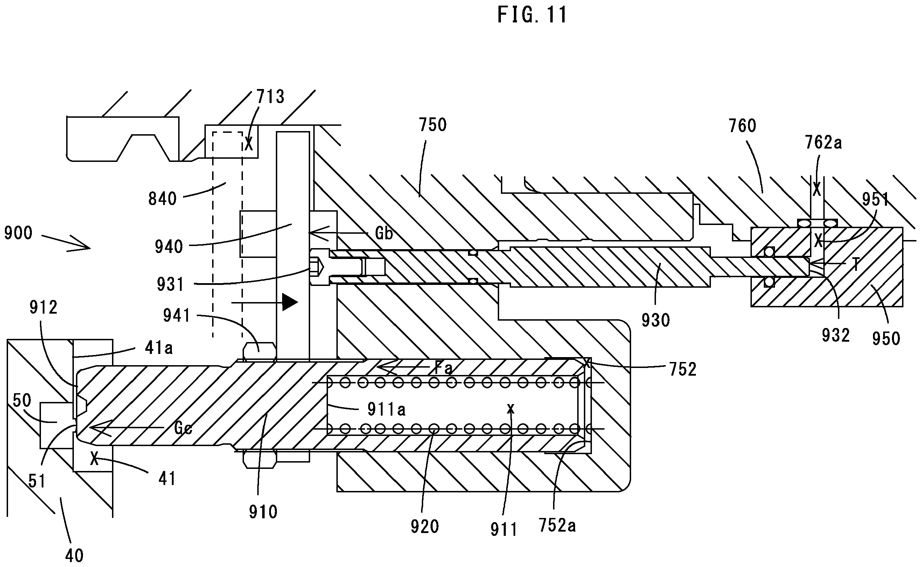

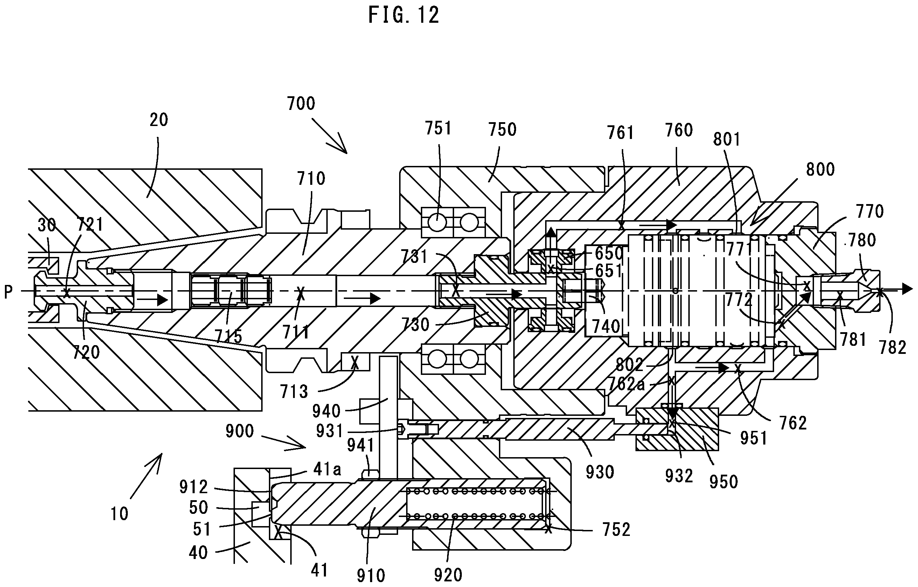

FIG. 10 is a sectional view of the cooling medium spray device 700 of the third embodiment. FIG. 11 is a drawing that illustrates an operation that attaches the cooling medium spray device 700 of the third embodiment to the machine tool 10. FIG. 12 is a drawing that shows the state of the cooling medium-spray device 700 of the third embodiment attached to the machine tool 10.

The cooling medium spray device 700 of the third embodiment is different from the cooling medium spray device 400 of the second embodiment in the structure that applies the pressure of the cooling medium within the second case passage to the rotation stopping pin.

Therefore, in the following, only structures differing from the cooling medium spray device 400 of the second embodiment will be described.

Like the cooling medium spray device 400 of the second embodiment, the cooling medium spray device 700 of the present embodiment includes a body part, a support part, a cap 770, a nozzle 780, a pump 800, a rotation stopping device 900 and a force detecting device.

The body part is constituted by a body member 710 and an adapter 730.

The support part is constituted by a cover 750, a case 760 and a ring member 790.

In the present embodiment, the case 760 has a branch passage 762a branched from a second case passage 762.

In the present embodiment, the cover 750 has a hole 752 that extends in the axial direction and opens at the rear end side. A rotation stopping pin 910 is inserted into the hole 752 so as to be movable along the extension direction of the hole 752. The rotation stopping pin 910 has a hole 911 that extends in the axial direction and opens at a front end side.

In addition, a spring 920 is disposed between a bottom wall 911a of the hole 911 and a bottom wall 752a of the hole 752.

Like the cooling medium spray device 400 of the second embodiment, a rotation stopping lever 940 is fixed to a rear end side of the rotation stopping pin 910 and is engageable in an engagement hole 713 of the body member 710.

Furthermore, a transmitting member 930 is provided in the cover 750 so as to be movable along the axial direction relative to the cover 750. The transmitting member 930 is disposed such that a transmitting member rear end surface 931 protrudes toward the rear end side from the cover 750 and a transmitting member front end surface 932 protrudes toward the front end side from the cover 750. The transmitting member 930 is configured such that the transmitting member rear end surface 931 abuts on the rotation stopping lever 940 from the front end side.

Furthermore, a connecting member 950 having a connecting passage 951 is provided. The connecting passage 951 is open at both ends. The connecting member 950 is disposed such that an opening of one end of the connecting passage 951 communicates with the second case passage 722 (the branch passage 722a) and the transmitting member front end surface 932 is inserted into the connecting passage 951 from an opening at the other end of the connecting passage 951.

Owing to this structure, the pressure of the cooling medium within the second case passage 722 (the branch passage 722a) is applied to the transmitting member front end surface 932 via a communication passage constituted by the connecting passage 951. That is, the pressure of the cooling medium within the second case passage 722 is transmitted to the rotation stopping pin 910 via the connecting passage 951, the transmitting member 930 and the rotation stopping lever 940, and acts as a force that moves the rotation stopping pin 910 toward the rear end side.

Furthermore, in the present embodiment, like the cooling medium spray device 400 of the second embodiment, a force detecting device is provided that is constituted by the force detecting sensor 50 that detects a force with which a rotation stopping pin rear end surface 912 is pressing against the wall surface 41a of the fitting hole 41.

A "rotation stopping device" of the present invention is constituted by the rotation stopping pin 910, the spring 920, the transmitting member 930, the rotation stopping lever 940, the engagement hole 713, the fitting hole 41 and the wall surface 41a of the fitting hole 41.

An example of an operation that attaches the cooling medium spray device 700 to the machine tool 10 is shown in FIG. 11. The operation that attaches the cooling medium spray device 700 to the machine tool 10 is similar to the operation that attaches the cooling medium spray device 400 of the second embodiment to the machine tool 10.

Like the cooling medium spray device 100 of the first embodiment, in a state in which the body member 710 has been attached to the main shaft 20 but the main shaft 20 is not rotating, the rotation stopping pin rear end surface 912 presses the wall surface 41a of the fitting hole 41 with a force Ga corresponding to the elastic force Fa of the spring 920.

In this state, the force detection signal outputted from the force detecting sensor 50 indicates the force Ga corresponding to the elastic force Fa.

In addition, like the cooling medium spray device 400 of the second embodiment, in the state in which the body member 710 has been attached to the main shaft 20 and the main shaft 20 is rotating, the rotation stopping pin rear end surface 912 presses the wall surface 41a of the fitting hole 41 with a force Gc (=Ga+Gb) in which the force Ga corresponding to the elastic force Fa of the spring 920 is added to the force Gb corresponding to the pressure T of the cooling medium within the second case passage 462. That is, the force detection signal outputted from the force detecting sensor 50 indicates the sum Gc (=Ga+Gb) of the force Ga corresponding to the elastic force Fa and the force Gb corresponding to the pressure T of the cooling medium within the second case passage 462.

Then, the state of the cooling medium spray device 400 is determined based on the force Gc (=Ga+Gb) in the state in which the body member 710 has been attached to the main shaft 20 and the main shaft 20 is rotating, and based on the force Ga in the state in which the body member 710 has been attached to the main shaft 20 but the main shaft 20 is not rotating.

A method similar to the method used in the cooling medium spray device 700 of the second embodiment, for example, can be used as a method for determining the state of the cooling medium spray device 700 based on the force Ga and the force Gc.

It is noted that, in the present embodiment, the pressure T of the cooling medium within the second case passage 762 is indicated by [force Gb (N)/sectional area (mm²) of the transmitting member front end surface 932].

The present disclosure is not limited to the configurations described in the embodiments, and a variety of modifications, additions and omissions are possible.

Although cases were described in the detailed description in which the pressure of the pressing part (the rotation stopping pin) against the abutment part (the wall surface of the fitting hole) and the pressure of the cooling medium within the second passage (the second case passage) of the support part are detected, it can be configured such that either the pressure applied by the pressing part or the pressure of the cooling medium within the second passage (the second case passage) of the support part is detected.

The force detecting sensor that detects the force (pressure, load) with which the pressing part is pressing against the abutment part may be provided either in the abutment part or in the pressing part.

Although it was configured such that rotation of the support part around the body part is prevented by fitting (inserting) the pressing member (the rotation stopping pin) into the fitting part (the fitting hole) and abutting the pressing member (the rotation stopping pin) on the abutment part (the wall surface of the fitting hole), it can be configured such that rotation of the support part around the body part is prevented by abutting the pressing member (the rotation stopping pin) on the abutment part or by fitting the pressing member (the rotation stopping pin) into the fitting part .

Although the body part was constituted by a body member and an adapter of separate bodies, it can also be constituted by a single member. The shape and structure of the body part can be variously changed.

Although the support part was constituted by the cover, the case and the ring member, it can also be constituted by a single member. The shape and structure of the support part can be variously changed.

Various structures can be used as structures that rotatably support the body part in the support part.

Various methods can be used as a method that fixes the support part to the machine tool with the body part attached to the main shaft.

Various kinds of known pumps having a rotary part, an inlet part and an outlet part can be used as the pump.

Various methods can be used as a method that connects the body part and the rotary part of the pump.

The shape and structure of the cap can be variously changed.

Various kinds of nozzles having various structures can be used as the nozzle.

Various kinds of known filters can be used as the filter. It is noted that the filter can also be omitted.

The rotation stopping device may only at least fix the holding part to the machine tool when the rotary part of the pump is rotating with the body part attached to the main shaft of the machine tool, and various kinds of rotation stopping devices having various structures can be used as the rotation stopping device. Further, various methods can be used as a method that fixes the holding part to the machine tool.

Various kinds of force detecting devices having various structures can be used as the force detecting device.

Various methods can be used as the method that determines the pressure of the cooling medium that was increased by the pump without limitation to the methods described in the embodiments. For example, the pressure of the cooling medium can be directly or indirectly detected by a pressure detecting device.

In addition, the location of the cooling medium where its pressure is detected can be appropriately changed.

Each of the features or structures described in the embodiments can be used individually or in combination of appropriately selected ones.

The cooling medium spray device of this disclosure is preferably used with a machine tool having a tool magazine configured to house a plurality of tool holders, but it can also be used with machine tools having various other structures.

### Description of the Reference Numerals

10: machine tool, 20: main shaft of the machine tool, 20a: main shaft interior space, 21: main shaft inner peripheral surface, 21a: main shaft inner peripheral surface portion, 30: pulling-in member, 40: fixing part, 41: fitting hole (fitting part), 41a: wall surface, 50: force detecting sensor (pressure detecting sensor, load detecting sensor), 51: pressure receiving surface, 100, 400, 700: cooling medium spray device, 110, 410, 710: body member, 111, 411, 711: body member passage, 112, 412, 712: shank part, 112a, 412a, 712a: body member outer peripheral surface portion, 113, 413, 713: engagement hole (engagement part), 120, 420, 720: pull stud, 121, 421, 721: pull stud passage, 115,415, 715: filter, 130, 430, 730: adapter (connecting member), 131, 431, 731: adapter passage (connecting member passage), 140, 440, 740: knock pin, 150, 450, 750: cover, 151, 451, 751: bearing, 152, 452, 752: hole, 152a, 452a, 752a: bottom wall, 160, 460, 760: case, 161, 461, 761: first case passage (first passage), 162, 462, 762: second case passage (second passage), 170, 470, 770: cap, 171, 471, 771: nozzle mounting hole, 172, 472, 772: cap passage, 180, 480, 780: nozzle, 181, 481, 781: nozzle passage, 182, 482, 782: spray hole, 190, 490, 790: ring member, 191, 491, 791: ring member passage, 200, 500, 800: pump, 201, 501, 801: inlet part, 202, 502, 802: outlet part, 300, 600, 900: rotation stopping device, 310, 610, 910: rotation stopping pin, 311, 611, 911: hole, 311a, 611a, 911a: bottom wall, 312, 612, 912: rotation stopping pin rear end surface, 320, 620, 920: spring (elastic force generating part), 340, 640, 940: rotation stopping lever, 341, 641, 941: nut, 453: passage, 462a, 762a: branch passage, 611: hole, 630, 930: transmitting member, 631, 931: transmitting member rear end surface, 632, 932: transmitting member front end surface, 650, 950: connecting member, 651, 951: passage

## Claims

1. A cooling medium spray device that increases a pressure of a cooling medium supplied from a main shaft of a machine tool and sprays the cooling medium, comprising:
a body part, a support part, a pump, a cap, a nozzle, a rotation stopping device and a force detecting device,
wherein:
the body part is removably attachable to the main shaft, and has a body part passage through which the cooling medium supplied from the main shaft passes in a state in which the body part has been attached to the main shaft,
the support part has a support part interior space in which the body part is rotatably disposed, a first passage and a second passage, the first passage communicating with the body part passage,
the pump includes a rotary part that is connected to the body part and is rotatably disposed in the support part interior space of the support part, an inlet part that communicates with the first passage of the support part, and an outlet part that communicates with the second passage of the support part, the pump being configured such that, by rotating the rotary part, the pressure of the cooling medium that is being suctioned from the inlet part is increased and it is discharged from the outlet part,
the cap is disposed at a location of the support part that is on one side of the pump in an axial direction so as to close the support part interior space of the support part, and the cap has a cap passage that communicates with the second passage of the support part and a nozzle mounting hole that communicates with the cap passage,
the nozzle is mounted in the nozzle mounting hole of the cap, and the nozzle has a spray hole that sprays the cooling medium and a nozzle passage that communicates with the nozzle mounting hole,
the rotation stopping device includes a pressing member that is provided on the support part, the rotation stopping device being configured such that, in the state in which the body part has been attached to the main shaft, the support part is prevented from rotating around the body part by abutment of the pressing member on an abutment part provided on the machine tool, and
the force detecting device includes a force detecting sensor that outputs a force detection signal indicating a force with which the pressing member is pressing against the abutment part.

2. The cooling medium spray device as defined in claim 1, wherein:
the body part is configured such that the body part can be attached to the main shaft by moving the body part toward the other side in the axial direction relative to the main shaft,
the rotation stopping device includes an elastic force generating part provided in the support part,
the pressing member is formed to be fittable in a fitting part provided in the machine tool while being movable in the axial direction relative to the support part,
the elastic force generating part generates an elastic force that moves the pressing member toward the other side in the axial direction relative to the support part, and
the rotation stopping device is configured such that, in the state in which the body part has been attached to the main shaft, the pressing member fits in the fitting part and the support part is prevented from rotating around the body part by abutting on a wall surface of the fitting part and by being moved toward the one side in the axial direction against the elastic force generated by the elastic force generating part.

3. The cooling medium spray device as defined in claim 2, wherein:
the rotation stopping device includes an engagement part provided in the body part, and an engaging member that is movable along the axial direction in conjunction with the pressing member and is engageable with the engagement part provided in the body part, and
the rotation stopping device is configured such that, in a state in which the body part is not attached to the main shaft, the engaging member is located at an engagement position where it engages with the engagement part and rotation of the body part relative to the support part is prevented, and in the state in which the body part has been attached to the main shaft, the engaging member is located at a disengagement position where it is disengaged from the engagement part and rotation of the body part relative to the support part becomes possible.

4. The cooling medium spray device as defined in claim 2 or 3, wherein it is configured such that the pressure of the cooling medium within the second passage of the support part acts as a force that moves the pressing member toward the other side in the axial direction.

5. The cooling medium spray device as defined in claim 2, wherein:
the rotation stopping device includes a transmitting member that transmits the elastic force generated by the elastic force generating part to the pressing member, and
the rotation stopping device is configured such that the pressure of the cooling medium within the second passage of the support part is transmitted to the pressing member via the transmitting member as a force that moves the pressing member toward the other side in the axial direction.

6. The cooling medium spray device as defined in claim 3, comprising:
a transmitting member that is movable along the axial direction relative to the support part, and abuts on the engaging member in the state in which the body part has been attached to the main shaft,
wherein:
it is configured such that, in the state in which the body part has been attached to the main shaft, the pressure of the cooling medium within the second passage of the support part is transmitted to the pressing member via the transmitting member and the engaging member as a force that moves the pressing member toward the other side in the axial direction.
